# EUROPEAN PATENT APPLICATION

(11) **EP 4 793 064 A1**
(43) Date of publication of application: **19.08.2026**
(21) Application number: 25157286.3
(22) Date of filing: 12.02.2025
(51) Int. Cl.: B60C 11/03, B60C 11/13

(54) **A TREAD BLOCK ARRANGEMENT FOR A TIRE OR FOR A TREAD BAND**

(71) Applicant: Nokian Renkaat Oyj, 37101 Nokia (FI)
(72) Inventor: JOKINEN, Mikko, 37101 NOKIA (FI); TIKKA, Jorma, 37101 NOKIA (FI)
(74) Representative: Berggren Oy

(57) **Abstract**

A tread block arrangement (200) for a tire (100) or a tread band. The tread block arrangement (200) comprises a first tread block (210) having a first corner (213), and a first groove (310), of which a part is limited by a first wall (212) of the first tread block (210). The first corner (213) is substantially sharp. The first tread block (210) comprises a first wall support (212s) having a top (212t) on the first wall (212), extending from the first corner (213), limiting a first part of the first groove (310), and extending to a bottom of the first groove (310). A primary width of the first groove (w1a) is greater than a secondary width of the first groove (w1b), wherein the primary width of the first groove (w1a) is defined at a location that is between a top (212t) of the first wall support (212s) and a top (21at) of the first tread block (210), and the secondary width of the first groove (w1b) is defined at a location that is between the top (212t) of the first wall support (212s) and a bottom of the first groove (310).

## Description

### Technical field

The invention generally relates to vehicle tires. Specifically, the invention relates to tread bands used for vehicle tires. More specifically, the invention relates to a tread block stability control system for a vehicle tire or a tread band. Such a tread block stability control system is implemented by an arrangement of tread blocks, i.e. tread block arrangement, on the tire tread or on a tread band for a tire.

### Background

A surface of a tire comprises a tread, which forms a rolling contact against a ground surface when the tire is in use. Many factors, including the tread pattern, materials of the tire, and tire structure, affect grip, handling, stability, and other driving properties of the tire. A tread comprises a plurality of tread blocks. In between tread blocks are grooves that are configured to guide water, slush, mud, and/or snow. The grooves help the other parts of the tread, namely the tread blocks, to grip the ground.

When in rolling contact with ground, for example, when making lateral movements with the vehicle, the grip and handling properties of the tire may be momentarily reduced, due to structural instabilities, such as vibrations, within the tread and tread blocks of the tire. As this reduces handling and stability, the vibrations may potentially be hazardous. Therefore, reducing such instabilities is required to improve the safety of the tires.

### Summary

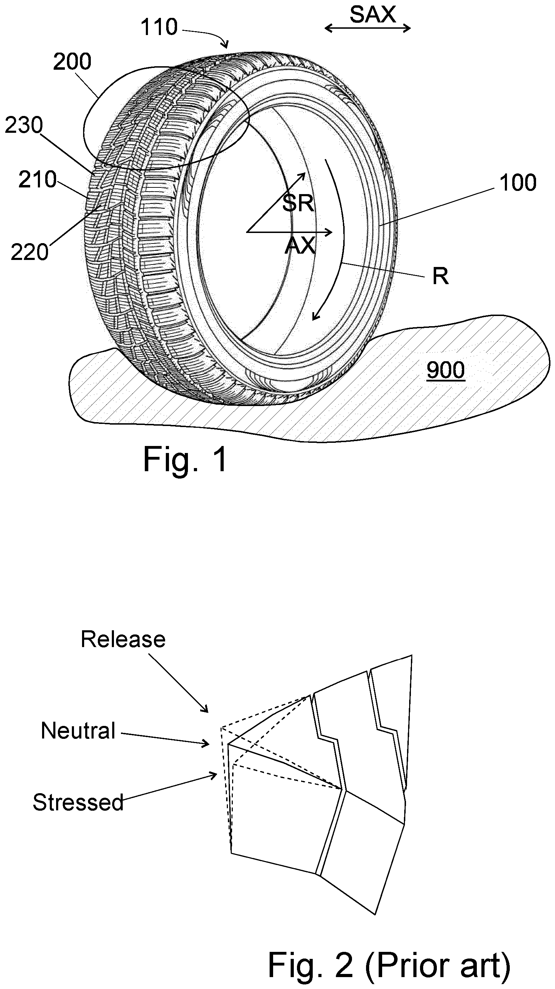

The inventors have found that the vibrations are a result of the elastic nature of the rubber material of the tread block of the tire in combination with the lateral movements of the vehicle. Figure 2 illustrates a tread block corner according to prior art. In a 'Neutral' state, such as when driving straight without acceleration or deceleration, a corner of the tread block is in a stress-free position. When stress is applied to the tread block corner, for example, in a situation in which a tire 100 is in use and lateral movement is made with the vehicle, for example, when cornering or overtaking a vehicle on a road, the tread block corner builds tension and enters the 'Stressed' state. The tension on the tread block corner is quickly released, thus the tread block corner enters the `Release' state, leading to vibrations within the tread block corner; much like a mass attached to a spring oscillating around its neutral position. Due to the tension release, the grip and handling properties of the tire may be momentarily significantly reduced. This structural instability within the tire can lead to dangerous, potentially hazardous situations during use of the tire, especially on snow, slush, mud, or water covered roads and surfaces, which are slippery. Thus, minimizing such structural instabilities and vibrations within the tread and tire can vastly improve road safety. The invention presented further on is a tire tread block stability control system for overcoming the described problems.

The present invention provides a tread block arrangement forming a tread of a tire or a tread band for a tire, comprising a stability control system, which, when applied on a tire, improves grip and handling on snowy, icy, wet, muddy, and bare road. In particular, the tread has been observed to function well on a pneumatic tire, such as a pneumatic tire for a commercial vehicle, for a light truck, or for a passenger car. In particular, the tire may be designed for vehicles in categories M1 and N1, as defined in the as defined in the Consolidated Resolution on the Construction of Vehicles (R.E.3), document ECE/TRANS/WP.29/78/Rev.4, paragraphs 2 and 3. These categories are:
- M1: Vehicles used for the carriage of passengers and comprising not more than eight seats in addition to the driver's seat, and
- N1: Vehicles used for the carriage of goods and having a maximum mass not exceeding 3.5 tonnes.

The stability control system is implemented by an arrangement of tread blocks, i.e. tread block arrangement, on the tire tread or on a tread band for a tire. In particular, the stability is improved by providing a first tread block 210 comprising a first wall 212 that comprises a first wall support 212s on the first wall 212 such that the first wall support 212s extends from the first corner 213. Thus, the first wall support 212s supports the first corner 213. Moreover, to improve grip of the first corner 213 as such, the first corner is reasonably sharp. However, the vibration problem is prominent in sharp edges. This also indicates, why the first corner 213 needs the support. As for the sharpness of the first corner, an angle α1 between a first normal N1 of the first wall 212 and a second normal N2 of the second wall 214 is 130 to 170 degrees such that the first corner 213 is convex. The addition of the wall support to a corner mitigates the structural instabilities and vibrations as the wall supports solidifies and adds rigidity to the corner, lessening the effect and risk of undesired instabilities.

The invention is disclosed in more specific terms in appended independent claim 1. The dependent claims disclose preferable embodiments. The description and figures disclose, in addition, other embodiments thereof.

### Brief description of the drawings

- Fig. 1: illustrates a pneumatic tire, comprising a tread block arrangement forming the tread of the tire, the tread block arrangement limiting a groove pattern;
- Fig. 2: illustrates the structural instability of a tread block according to prior art;
- Fig. 3: illustrates a portion of the tread block arrangement on the pneumatic tire;
- Fig. 4a: illustrates a top view of a plurality of tread blocks, comprising wall supports, and grooves in between tread blocks;
- Fig. 4b: illustrates a top view of a tread block of Fig. 4a, comprising wall supports;
- Fig. 4c1: illustrates a top view of a corner of the tread block of Fig. 4b;

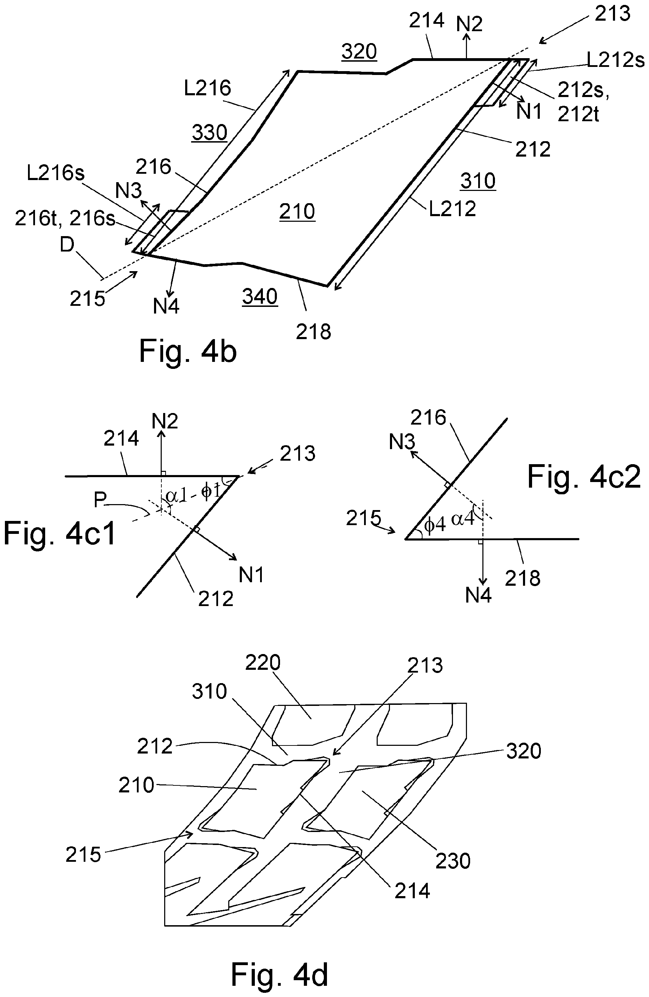

- Fig. 4c2: illustrates a top view of another corner of the tread block of Fig. 4b;
- Fig. 4d: illustrates a top view of a plurality of tread blocks, comprising wall supports, and grooves in between tread blocks;

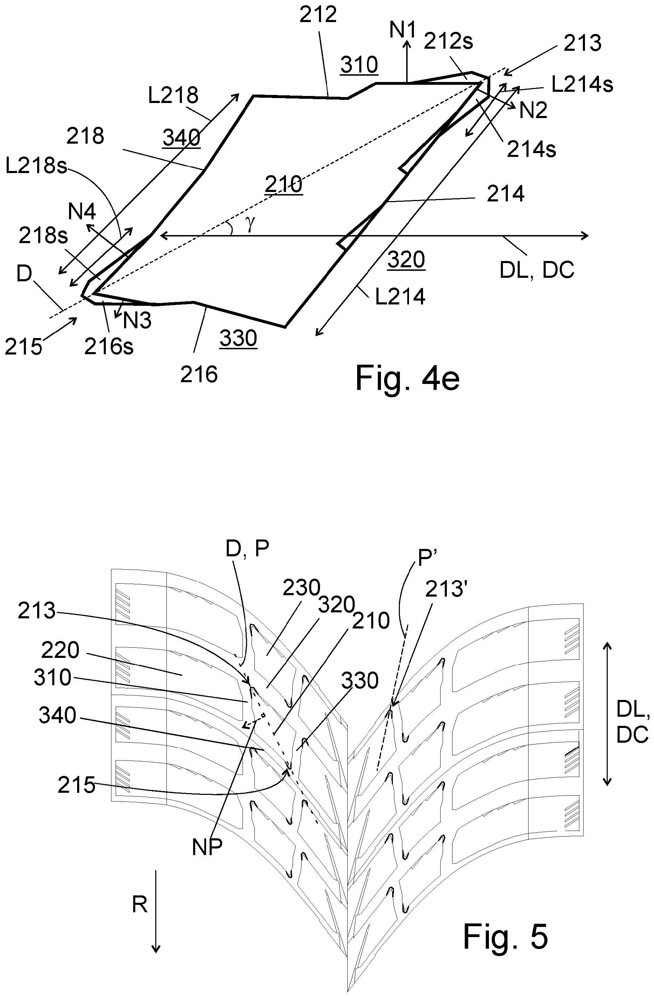

- Fig. 4e: illustrates a top view of a tread block comprising wall supports;
- Fig. 5: illustrates a top view of a plurality of tread blocks and grooves in between tread blocks;

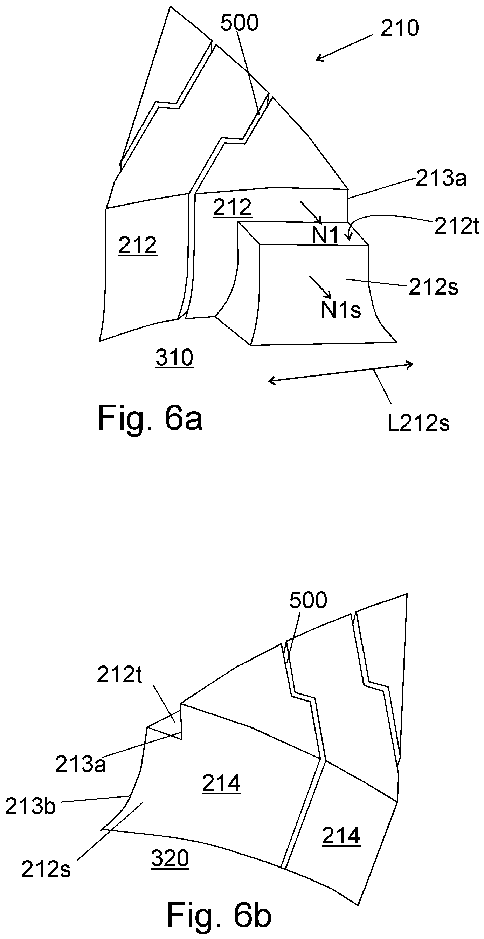

- Fig. 6a: illustrates a corner of a tread block comprising a wall support from a first view;
- Fig. 6b: illustrates the corner of Fig. 6a from a second view;

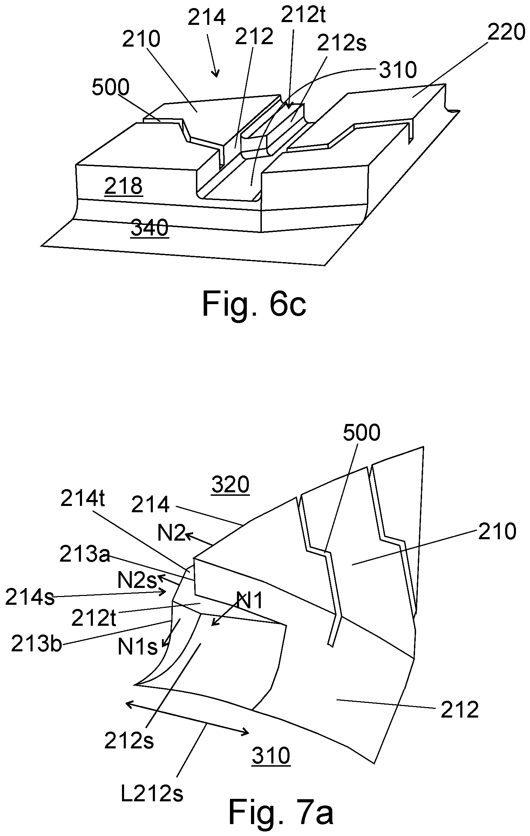

- Fig. 6c: illustrates tread blocks with a groove in between the tread blocks shallower than a crossing groove, one tread block comprising a wall support;
- Fig. 7a: illustrates a corner of a tread block comprising a wall support;

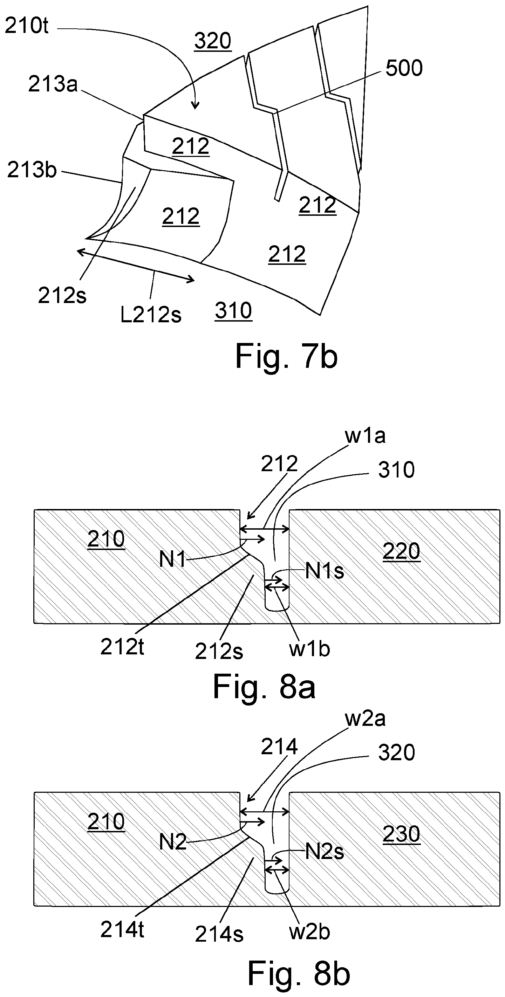

- Fig. 7b: illustrates a corner of a tread block comprising a wall support;
- Fig. 8a: illustrates a cross-section view of tread blocks and a first groove in between these tread blocks, a first tread block comprising a first wall support;
- Fig. 8b: illustrates a cross-section view of tread blocks and a second groove in between these tread blocks, the first tread block comprising a second wall support;

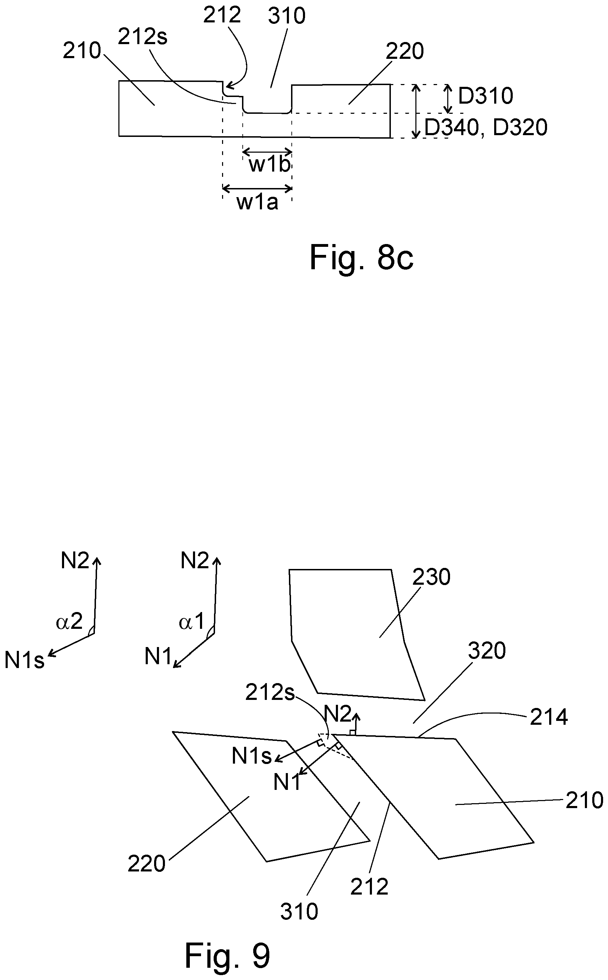

- Fig. 8c: illustrates a cross-section view of tread blocks, a first tread block comprising a first wall support;
- Fig. 9: illustrates in a top view normals of tread block walls, wall supports and angles formed between the normals.

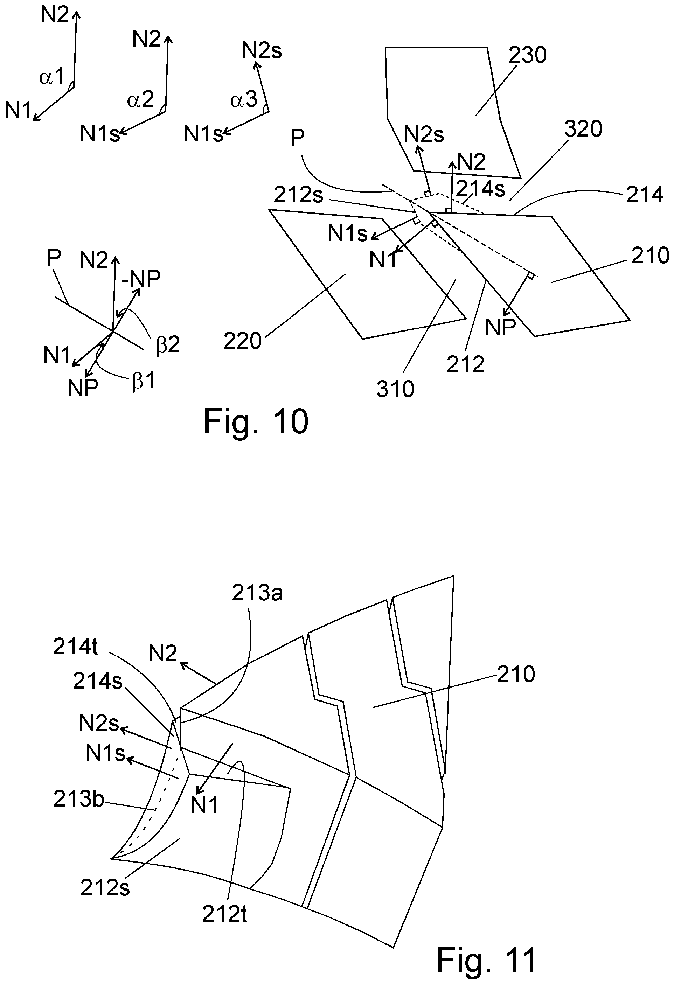

- Fig. 10: illustrates in a top view normals of tread block walls, wall supports and angles formed between the normals.
- Fig. 11: illustrates a first corner of a tread block comprising a wall support;

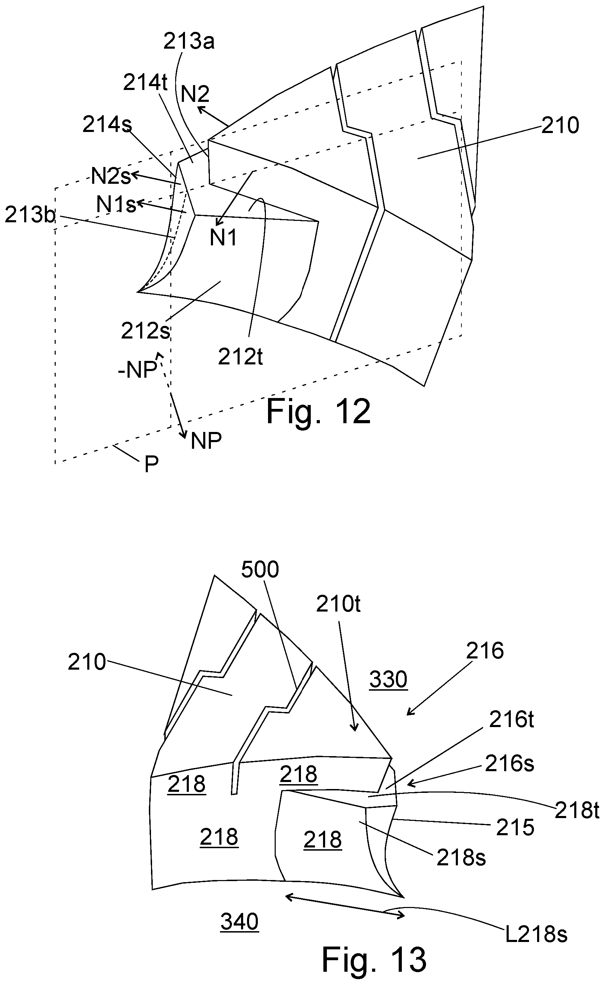

- Fig. 12: illustrates a first corner of a tread block comprising a wall support;
- Fig. 13: illustrates a second corner of a tread block comprising a wall support;

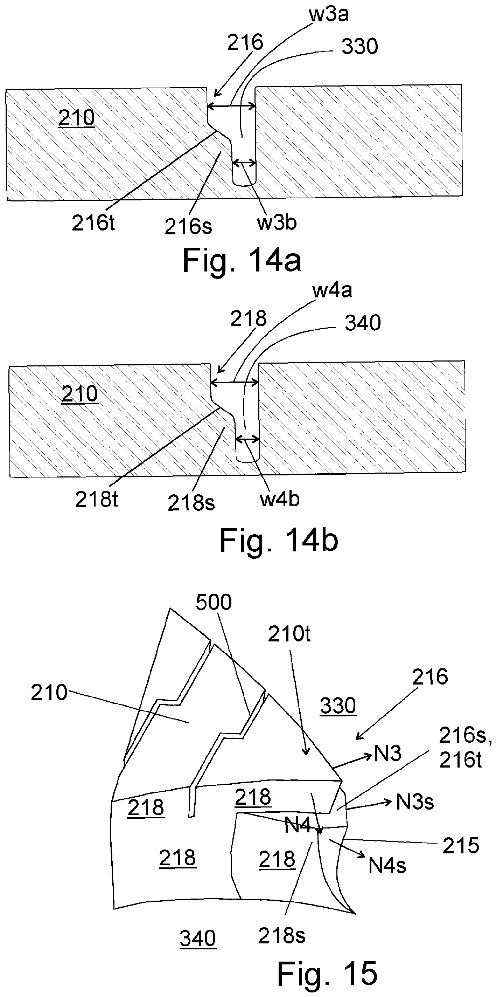

- Fig. 14a: illustrates a cross-section view of tread blocks and a third groove in between these tread blocks, a first tread block comprising a third wall support;
- Fig. 14b: illustrates a cross-section view of tread blocks and a fourth groove in between these tread blocks, a first tread block comprising a fourth wall support; and
- Fig. 15: illustrates a second corner of a tread block comprising a wall support.

### Detailed description

Figure 1 illustrates a pneumatic tire 100 comprising a tread block arrangement 200 forming a tread 110 of the tire 100. The tread 110 is the portion of the tire 100 that is in contact with a surface 900 when in use, the surface 900 being, for example, a road, a ground, or an ice surface, optionally covered with water, snow, slush, and/or mud. The tread 110 is the top surface of the tread block arrangement 200, the tread block arrangement 200 comprising a plurality of tread blocks; namely a first tread block 210 and further tread blocks, including a second tread block 220 and a third tread block 230.

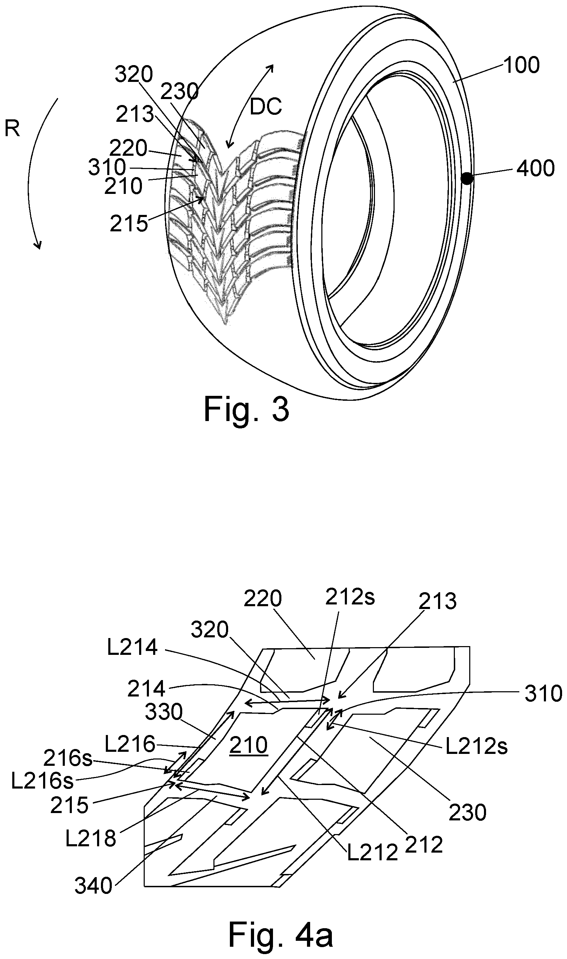

The direction of the rotation of the tire is indicated by the arrow R, a rotational axis of the of the tire is indicated by AX. An axial direction of the tire is indicated by SAX and a radial direction is indicated by SR. SAX is also parallel to a transverse direction of the tread 110. Figure 3 illustrates a portion of the tread block arrangement 200 that repeats along a circumferential direction DC that follows the surface of the tire 100 in the manner of Figure 1.

Figure 4a illustrates a top view of an embodiment of a part of a tread block arrangement 200. The a tread block arrangement 200 comprises, in addition to the aforementioned tread blocks 210, 220, 230, a first groove 310, of which a part is limited by a first wall 212 of the first tread block 210, and a second groove 320 of which a part is limited by a second wall 214 of the first tread block 210, wherein the first wall 212 and the second wall 214 meet at a first corner 213 of the first tread block 210. Likewise, the first groove 310 and the second groove 320 meet at an intersection of these grooves, the intersection being adjacent to the first corner 213. The grooves are formed to enhance the removal of undesired substances such as snow, slush, mud, and/or water from the surface of the tire 100 and the tread block arrangement 200 to retain the grip and handling properties of the tire during use. A second corner 215 of the first tread block is, effectively, an opposite corner to the first corner 213. The second corner 215 will be described further on. A wall 212, 214, 216, 218 may be substantially flat as in Figs. 4a and 4b, or a wall 214 may comprise dents (shown without a reference numeral) as in Figs. 4d and 4e.

In this embodiment, the first corner 213 and the second corner 215 both comprise a wall support 212s, 216s. A part of a groove 310, 320, 330, 340 is, in general, arranged between a tread block, e.g. the first tread block 210, and one of [i] another tread block (e.g. 220, 230) or [ii] a rib continuously extending around the tyre or throughout a length of the tread band. However, such a rib can be called a large tread block. Such a rib is shown in Fig. 5, in the centre of the tread block arrangement of the figure. Figure 4b is a further top view illustration of the first tread block of Figure 4a. Even if in Figs. 4a to 4e both the first corner 213 and the second corner 215 comprise a wall support 212s, 216s, it may suffice that only the first corner 213 comprises a first wall support 212s.

Figs. 6a and 6b show in more detail the first corner 213 of a first tread block 210. The first tread block 210 comprises a first wall 212 and, arranged thereon, a first wall support 212s having a top 212t. The first wall support 212s extends from the first corner 213, which comprises a first part 213a and a second part 213b. More specifically, the first wall support 212s extends from the second part 213b of the first corner 213.

A technical function of the first wall support 212s is to support the first wall 212, in particular the first corner 213, to increase a mechanical stiffness of the first corner 213, which is why the first wall support 212s extends from the first corner 213. As further illustrated in Figures 4b, 6a, and 6c, a side of the first wall support 212s limits a first part of the first groove 310; and as readable from Fig. 6a and/or Fig. 6c, the side of the first wall support 212s extends to a bottom of the first groove 310. As shown in Figs. 6a and 7a, the top 212t of the first wall support 212s forms a first step onto the first wall 212.

The first wall support 212s is arranged at the first corner 213, which is substantially sharp. In more specific terms, a first part of the first wall 212 extends from the first corner 213 (the first part 213a thereof) and extends from the top 210t of the first tread block 210. The first part of the first wall 212 defines a first normal N1, the first normal N1 being directed into the first groove 310. Reference is made to Figs. 4c1, 6a, 7a, 8a, and 9. Similarly, a first part of the second wall 214 extends from the first corner 213 (particularly the first part 213a thereof) and also extends from the top 210t of the first tread block 210, the first part of the second wall 214 defining a second normal N2, the second normal N2 being directed into the second groove 320. The second normal N2 is shown at least inFigs. 4c1, 7a, 8b, and 9. Referring to Figs. 4c1, the first corner 213 is sharp so that an angle ϕ1 between the first part of the first wall 212 and the first part of the second wall 214 is small, e.g. 10 to 50 degrees or 15 to 50 degrees. As shown inFigs. 4c1such an angle ϕ1 between the first parts of the walls 212, 214 relates to the first normal N1 and the second normal N2 such that an angle α1 between the first normal N1 and the second normal N2 is 180°- ϕ1. Therefore, in terms of the angle α1 between the first normal N1 and the second normal N2, the first corner 213 is so sharp that the angle α1 is 130 to 170 degrees. Preferably, the angle α1 is 130 to 165 degrees.

Even if a value of above 130 degrees for the angle α1 implies a sharp corner, which in prior art may result in vibration problems, a sharp first corner 213 is very effective on difficult road conditions, especially snow/slush/mud, as the first corner 213 (as well as a second corner 215) bite well into the snow/slush/mud, improving grip and handling properties of the tire. Moreover, as is evident from the figures, the first corner 213 is convex. In particular, a shape of a cross-section of the first tread block 210, the cross section being on a plane that is parallel to the tread (as shown e.g. in Fig. 4b), is such that the first corner 213 is convex. In principle, the angle α1 alone does not define whether the first corner 213 is convex or concave; which can be verified by imagining the angle ϕ1 in Figs. 4c1 increasing to 180 degrees and above. However, if the angle ϕ1 would be above 180 degrees, the corner 213 would be concave, which is not the case in the present invention.

As a result of the first wall support 212s, the first groove 310 is narrower at bottom than at top. More specifically, and with reference to Fig. 8a, a primary width of the first groove w1a is greater than a secondary width of the first groove w1b, wherein the primary width of the first groove w1a is defined at a location that is between the top 212t of the first wall support 212s and the top 210t of the first tread block 210, and the secondary width of the first groove w1b is defined at a location that is between the top 212t of the first wall support 212s and a bottom of the first groove 310. More precisely, the primary width of the first groove w1a is defined at a location that is on a shortest line that connects the top 212t of the first wall support 212s and the top 210t of the first tread block 210. Likewise, the secondary width of the first groove w1b is defined at a location that is on a shortest line that connects the top 212t of the first wall support 212s and a bottom of the first groove 310.

For example, a primary width of the first groove w1a is, in an embodiment 0.1 mm to 3 mm greater than the secondary width of the first groove w1b. Preferably, the primary width of the first groove w1a is 0.5 mm to 2.5 mm or 1.5 to 2.5 mm greater than the secondary width of the first groove w1b. These values indicate a thickness of the first support 212s as such, and thus indicate the capability of stiffening the first corner. Moreover, to have a sufficiently wide first groove 310 for transferring water/slush/snow/mud, in an embodiment, the primary width of the first groove w1a is 3 mm to 10 mm. For similar reasons, in an embodiment, the secondary width of the first groove w1b is 1 mm to 10 mm.

The stiffening of the first corner 213 is also affected by a height of the first wall support 212s as measured in the radial direction SR. The tops 212t, 214t of the wall supports have to be set at a suitable level, on one hand, for the first corner 213 to provide improved grip and handling properties and, on the other hand, for the wall supports 212s, 214s to provide sufficient support for the first corner 213. If the tops of 212t, 214t are too close to the top 210t of the first tread block, the increased grip and handling properties due to the first corner 213 may be reduced as the tops 212t, 214t may begin affecting the first corner 213 properties. Moreover, the corner 213 should preferably be sharp also after the tyre has worn to some extent, which is another reason, why the tops 212t, 214t should not be too close to the top 21at of the first tread block. Then again, if the tops 212t, 214t are too close to the bottom of the grooves 310, 320, the support effect of the wall supports 212, 214 may not be sufficient. This applies to other embodiments comprising other grooves 330, 340, wall supports 216s, 218s and their wall support tops 216t, 218t, respectively. Thus, in a preferable embodiment, the arrangement of the top 210t of the first tread block 210, the top 212t of the first wall support 212s is executed so that the top 212t of the first wall support 212s is arranged at least 2 mm from a bottom of the first groove 310 and at least 2 mm from the top 210t of the first tread block 210. In an embodiment, the top 212t of the first wall support 212s forms a first step on the first wall 212, the first step being arranged at a position defined by these measures. This ensures a suitable stiffening. Moreover, these values have been found particularly suitable, when a depth D310 of the first groove 310 is 4 mm to 12 mm; most preferably 6 mm to 10 mm.

Moreover, to ensure that the first groove 310 drains well water/slush/mud/snow, the first wall support 212s does not extend throughout the length of the first wall 212 in the direction of the first groove 310. More specifically, referring to Figs. 4a and 4b, when a length of the first wall 212, which is defined in the longitudinal direction of the first groove 310, is denoted by L212, a length of the first wall support L212s (also defined in the longitudinal direction of the first groove 310) is at most 50% of the length L212 of the first wall 212; i.e. L212s ≤ L212×0.5. Reference is made to Figs. 4a and 4b. Typically, as shown in Figs. 4a and 4b, the other corner to which the first wall 212 ends, is not sharp, whereby that corner does not need to have a wall support, as shown in Figs. 4b and 4e. Therefore, the first wall support 212s may be reasonably long as defined above. However, to improve the draining capacity of the first groove 310, preferably the length L212s of the first wall support is at most a third (33%), more preferably at most a fourth (25%) of the length L212 of the first wall; both measured in the longitudinal direction of the first groove 310.

Figures 6a and 6b illustrate in detail the first corner 213 of an embodiment like the embodiment of Fig. 4a or 4b. Shown in figures 6a and 6b is a part of the first tread block 210 comprising the first wall support 212s. As detailed therein, the first corner 213 comprises a first part 213a extending from the top 210t of the first tread block 210. Figure 6a illustrates the first tread block 210 from the side of the first wall 212 while Figure 6b illustrates the first tread block 210 from the side of the second wall 214. The notably, the first part of the first wall 212, which has the first normal N1, extends from the first part 213a of the first corner 213 and extends from the top 210t of the first tread block 210. Moreover, the second part of the first wall 212, which is formed by the first wall support 212s, defines a first support normal N1s, the first support normal N1s being directed into the first groove 310.

In a preferable embodiment, shown e.g. in Figs. 7a and 7b, another purpose of the first wall support 212s is to make the first corner 213 less sharp at such a point of the first edge 213 that is defined by the first wall support 212s. Namely, as shown in Figure 7b, in addition to the first part 213a of the first corner 213 as discussed before, the first corner 213 further comprises a second part 213b, the second part 213b being defined by the first wall support 212s. As illustrated, the second part 213b of the first corner 213 extends from a bottom of an intersection of the first groove 310 and the second groove 320. As shown therein, the first wall support 212s extends from the second part 213b of the first corner 213. Moreover, as shown in Figs. 7a, 7b, and 9, a second part of the first wall 212 extends from the first corner 213 (from the second part 213b of the first corner 213) and is defined by the first wall support 212s. The second part of the first wall 212, which is formed by the first wall support 212s, defines a first support normal N1s, the first support normal N1s being directed into the first groove 310, shown in Figs. 6a, 7a, 9, and 10. Referring to Figs. 9 and 10, in an embodiment, an angle α2 between the first support normal N1s and the second normal N2 is less than the angle α1 between the first normal N1 and the second normal N2, which angle α1 has been discussed above. This has the effect that the second part 213b of the first corner 213 is not as sharp as the first part 213a of the first corner 213. This also reduces the vibrations of the first edge 213.

As discussed above, a shape of a cross-section of the first tread block 210, the cross section being on a plane that is parallel to the tread, is such that the first part 213a of the first corner 213 is convex. Herein the shape refers to the shape of a cross-section of the first tread block 210, the cross section being on a plane that is parallel to the tread. Moreover, a shape of a cross-section of the first tread block 210, the cross section being on a plane that is parallel to the tread, is such that the second part 213b of the first corner 213 is not concave (i.e. it is straight or convex). In an embodiment, a shape of a top of the first tread block 210 resembles quadrilateral. In an embodiment, a shape of a top of the first tread block 210 resembles a parallelogram. If the shape of a top of the first tread block 210 resembles quadrilateral, the first wall 212, the second wall 214, the third wall 216 and the fourth wall 218 constitute edges of the quadrilateral formed by the top of the first tread block 210.

The first tread block 210 further comprises a third wall 216 and a fourth wall 218. In addition to the first groove 310 and the second groove 320, a third groove 330, of which a part is limited by the third wall 216 of the first tread block 210, and a fourth groove 340, of which a part is limited by the fourth wall 218 of the first tread block 210, also surround the first tread block 210. The third wall 216 and the fourth wall 218 meet at the second corner 215 of the first tread block 210. In the embodiment of Figs. 4a to 4e, the second corner 215 and the first corner 213 are arranged on a diagonal D of the first tread block 210, preferably, the second corner 215 and the first corner 213 are arranged on such a diagonal of the first tread block 210 that is the longest of all diagonals of the first tread block 210. As the shape of the top 210t of the first tread block 210 resembles a quadrilateral, preferably a parallelogram, the corners that are arranged on the longest diagonal, are by angular value (e.g. ϕ1), smaller than those angles not arranged to the longest diagonal. Thus, as the angular values of the first corner 213 and second corner 215 are smaller, they require additional support, i.e. wall supports, more than the corners that are not arranged on the diagonal.

However, as indicated above, the first corner 213 may be a corner of a central rib, i.e. a large tread block extending throughout the tread in the circumferential direction, which constitutes the first tread block. Also in such a case, the first tread block (the central rib) may comprise a second corner 215 that is supported. However, in that case the corners 213, 215 would not be arranged on a diagonal. Nevertheless, also in such a case, the second corner 215 is substantially sharp like the first corner 213.

To support also the second corner 215, in an embodiment there are two wall supports 212s, 216s on the opposite ends of the diagonal, each wall support extending from different corners of the first tread block 210, as shown in Figs. 4b and 4e. The direction D of the diagonal is also shown in these figures. Referring to Figs. 4b, 4e, and 13, in an embodiment, the first tread block 210 comprises, in addition to the first wall support 212s, a third wall support 216s having a top 216t on the third wall 216. The top 216t of the third wall support 216s forms a third step onto the third wall 216. The third wall support 216s extends from the second corner 215. A side of the third wall support 216s limits a first part of the third groove 330, the side of the third wall support 216s extending to a bottom of the third groove 330. Moreover, a primary width of the third groove w3a is greater than a secondary width of the third groove w3b, wherein the primary width of the third groove w3a is defined at a location that is between the top 216t of the third wall support 216s and a top 210t of the first tread block 210, and the secondary width of the third groove w3b is defined at a location that is between the top 216t of the third wall support 216s and a bottom of the third groove 330. This is shown in Fig. 14a. A purpose of the third wall support 216s is to support the second corner 215; in the same way as the first wall support 212s supports the first corner 213.

What has been said about the primary width of the first groove w1a and the secondary width of the first groove w1b, applies *mutatis mutandis* to the primary width of the third groove w3a and the secondary width of the third groove w3b. Reference is made to Fig. 14a. Preferably, the primary width of the third groove w3a is 0.1 mm to 3 mm greater than the secondary width of the third groove w3b. More preferably, the primary width of the third groove w3a is 0.5 mm to 2.5 mm or 1.5 mm to 2.5 mm greater than the secondary width of the third groove w3b. The primary width of the third groove w3a is defined at a location that is between the top 216t of the third wall support 216s and the top of the first tread block 210, and the secondary width of the third groove w3b is defined at a location that is between the top 216t of the third wall support 216s and a bottom of the third groove 330.

Similarly, as in the case of the first corner 213, the arrangement of the top 210t of the first tread block 210, the top 216t of the third wall support 216s is executed so that the top 216t of the third wall support 216s is arranged at least 2 mm from a bottom of the third groove 330 and at least 2 mm from the top 210t of the first tread block 210. In an embodiment, the top 216t of the third wall support 216s forms a third step on the third wall 216, the third step being arranged at a position defined by these measures.

Moreover, to ensure that the third groove 330 drains well water/slush/mud/snow, the third wall support 216s does not extend throughout the length of the third wall 216 in the direction of the third groove 330. More specifically, referring to Figs. 4a and 4b, in an embodiment, a length of the third wall support L216s is at most 50% of a length L216 of the third wall 216, both measured in a longitudinal direction of the third groove 330; i.e. L216s ≤ L216×0.5. However, to improve the draining capacity of the third groove 330, preferably the length L216s of the third wall support is at most a third (33%), more preferably at most a fourth (25%) of the length L216 of the third wall; both measured in a longitudinal direction of the third groove 330.

Figure 4d illustrates, in a similar manner as Figure 4a, a top view of an embodiment of a tread block arrangement 200, comprising four wall supports, one wall support 212s, 214s, 216s, 218s on each one of the walls 212, 214, 216, 218 and two wall supports ((212s, 214s); (216s, 218s)) on each corner 213, 215. Figs. 7a and 7b show in detail the first corner 213 of a first tread block, e.g. the first tread block of Figs. 4d and 4e. Figs. 13 and 15 show in detail the second corner 215 of a first tread block, e.g. the first tread block of Figs. 4d and 4e.

As illustrated in Figs. 4d, 4e, 7a, and 7b, in an embodiment, the first tread block 210 comprises the first wall support 212s and the second wall 214 comprises a second wall support 214s. The second wall support 214s comprises a top 214t, which is on the second wall 214. The second wall support 214s extends from the first corner 213. The top 214t of the second wall support 214s forms a second step onto the second wall 214. A side of the second wall support 214s limits a first part of the second groove 320, the side of the second wall support 214s extending to a bottom of the second groove 320. Moreover, A primary width of the second groove w2a is greater than a secondary width of the second groove w2b. Hereinabove, the primary width of the second groove w2a is defined at a location that is between the top 214t of the second wall support 214s and the top 210t of the first tread block 210, and the secondary width of the second groove w2b is defined at a location that is between the top 214t of the second wall support 214s and a bottom of the second groove 320. Reference is made to Fig. 8b. A purpose of the second wall support 214s is to further support the first corner 213.

What has been said concerning the primary width of the first groove w1a and the secondary width of the first groove w1b, applies *mutatis mutandis* to the primary width of the second groove w2a and the secondary width of the second groove w2b. In an embodiment, the primary width of the second groove w2a is 0.1 mm to 3 mm greater than the secondary width of the second groove w2b; preferably 0.5 mm to 2.5 mm or 1.5 mm to 2.5 mm greater. These widths are shown in more detail in Fig. 8b. Likewise, in an embodiment, the top 214t of the second wall support 214s is arranged at least 2 mm from a bottom of the second groove 320 and at least 2 mm from the top 210t of the first tread block 210. In an embodiment, the top 214t of the second wall support 214s forms a second step on the second wall 214, the second step being arranged at a position defined by these measures.

Moreover, to ensure that the second groove 320 drains well water/slush/mud/snow, the second wall support 214s does not extend throughout the length of the second wall 214 in the direction of the second groove 320. More specifically, referring to Fig. 4e, in an embodiment, a length of the second wall support L214s is at most 50% of a length L214 of the second wall 214, both measured in a longitudinal direction of the second groove 320; i.e. L214s ≤ L214×0.5. However, to improve the draining capacity of the second groove 320, preferably the length L214s of the second wall support is at most a third (33%), more preferably at most a fourth (25%) of the length L214 of the second wall; both measured in a longitudinal direction of the second groove 320.

Referring to Fig. 10, another purpose of the second wall support 214s is to make the first corner 213 even less sharp. Therefore, in an embodiment, a second part of the second wall 214 extends from the first corner 213 (from the second part 213b thereof) and is defined by the second wall support 214s. The second part of the second wall 214 defines a second support normal N2s, the second support normal N2s being directed into the second groove 320; as shown in Fig. 7a and 8b. To make the second part 213b of the first corner 213 less sharp than the first part 213 thereof, in an embodiment, an angle α3 between second support normal N2s and first support normal N1s is less than the angle α1 between the first normal N1 and the second normal N2; as shown in Fig. 10. More preferably, the angle α3 between second support normal N2s and first support normal N1s is less than the angle α2 between the first support normal N1s and the second normal N2; and the angle α2 between the first support normal N1s and the second normal N2 is less than the angle α1 between the first normal N1 and the second normal N2. Reference is made to Fig. 10. As will be detailed below, the angle α3 may be zero. As a general rule, the smaller the angle α3, the better the support provided by the wall supports 212s, 214s.

Concerning the first part 213a of the first corner 213 and the second part 213b of the first corner 213, the first part 213a is such a part of the first corner 213, where such a part of the first wall 212 that is above the top 212t of the first wall support 212s meets the second wall 214 (if not provided with the second wall support 214s) or meets such a part of the second wall 214 that is above the top 214t of the second wall support 214s. Likewise, the second part 213b of the first corner 213 is such a part of the first corner 213, where the first wall support 212s meets the second wall 214 (optionally being provided with the second wall support 214s at that point). Reference is made to Figs. 6b and 7b. As shown therein the first part 213a extends from a point of the top 210t of the first tread block 210 at which the first and second walls 212, 214 meet, along a surface of the first tread block 210, towards a bottom of an intersection of the first groove 310 and the second groove 320. Moreover, the second part 213b extends from a bottom of an intersection of the first groove 310 and the second groove 320, along a surface of the first tread block 210, towards the point of the top 210t of the first tread block 210 at which the first and second walls 212, 214 meet.

As shown in Figs. 11 and 12, even if the second part 213b extends from a bottom of an intersection of the first groove 310 and the second groove 320, the first support normal N1s and the second support normal N2s may be parallel with each other. In such a case, the first wall support 212s meets the second wall support 214b at multiple locations which all could, at least in principle, be considered to constitute the second part 213b of the first corner 213, even if no visible corner would be present at such a location (except the for the first part 213a, as seen in these figures). In such a case, the first corner 213 can be considered as an intersection of the first tread block 210 with a plane P that is defined by the following: [i] the point of the top 210t of the first tread block 210 at which the first and second walls 212, 214 meet; [ii] an intersection of the first groove 310 and the second groove 320; and [iii] the plane P having a normal NP that is a direction of the tread 110 at that point, namely *any* direction of the two-dimensional tread. Concerning point [iii] this implies that the plane P comprises a radial direction SR.

In an embodiment, the plane P is such that a normal NP thereof forms a primary angle β1 with the first normal N1; and another normal -NP of the plane P, the other normal -NP being reverse to the normal NP, forms a secondary angle β2 with the second normal N2, such that primary angle β1 is equal to the secondary angle β2. Such a plane P is illustrated in Figs. 10 and 12. Furthermore, the plane P further comprises the a points of an intersection of the first wall 212 and the second wall 214 between the top 210t of the first tread block 210 and the one of the tops 212t and 214t of the supports 212s, 214s that is closer to the top 210t of the first tread block 210. Thus, the intersection of the plane P with the wall support 212s or 214s will define the second part 213b of the first corner 213. In fact, the plane will also define the first wall support 212s and the second wall support 214s so that these wall supports 212s, 214s remain on different sides of the plane P. Reference is made to Fig. 12. However, as readable from Fig. 10, this definition for the second part 213b may apply also when the angle α3 is more than zero. In an embodiment, the plane P comprises a direction D of the diagonal of a top of the first tread block 210 comprising a point of the first corner 213 and a point of the second corner 215. In an embodiment, the wall supports 212s, 214s are preferably substantially parallel and identical in form, size and shape, but mirrored in relation to the plane P. This also applies to some other embodiments that comprise two wall supports on a corner (213, 215) but this feature is not mandatory for the invention. Moreover, the plane P, which divides the angle ϕ1 of the first corner 213 to two equally large halves, may comprise the diagonal comprising both the corners 213, 215. However, the plane P may be directed in other direction than the direction D of the diagonal. Reference is made to Figs. 4b and Figs. 4c1for these directions.

As shown in Figs. 6a-10 and 12, in an embodiment, the second part 213b of the first corner 213 is arranged 0.1 mm to 3 mm further apart from a centre of the first tread block 210 than the first part 213a of the first corner 213. Thus, the second part 213b of the first corner 213 does not extend directly from the first part 213a of the first corner, but instead the second part 213b and the first part 213a of the first corner 213 comprise a distance in between them, being the collective top 212t, 214t of wall supports 212s, 214s. However, in Fig. 11 the top portion of the second part 213b of the first corner 213, i.e. where the second part 213b of the first corner 213 meets the tops 212t, 214t of the wall supports 212s, 214s, is not arranged further apart from a centre of the first tread block 210 than the first part 213a of the first corner 213. In other words, the second part 213b of the first corner 213 is arranged as far apart from a centre of the first tread block 210 than the first part 213a of the first corner 213. Thus, therein, the second part 213b of the first corner 213 extends directly from the first part 213a of the first corner. The embodiments of Figures 11 and 12 provide examples of arranging wall supports in a manner that the first support normal N1s and second support normal N2s are substantially parallel to each other. The distance between the second part 213b and the first part 213a of the first corner 213, i.e. the size of the collective top 212t, 214t of wall supports 212s, 214s may be chosen and determined based on the required support for the first corner 213. Similarly, wall supports 216s, 218s of the second corner 215 may be arranged in a similar manner.

Referring to Fig. 6c, in an embodiment, the first groove 310 is not as deep as the fourth groove 340. Even if not well shown in Fig. 6c, the second groove 320, which is arranged behind the first tread block 210 in Fig. 6c, is as deep as the fourth groove 340. The depth of the first groove 310 of Fig. 6c is shown in detail in Fig. 8c by the reference D310. Moreover, depths of the second groove 320 and fourth groove 340 of Fig. 6c are shown in detail in Fig. 8c by the references D340, D320. As detailed above, in Fig. 6c, these grooves 320, 340 are equally deep. Thus, as shown in Figs. 6c and 8c, in an embodiment, a depth D310 of the first groove 310 is less than a depth D320 of the second groove 320. However, as readable from Figs. 7a, 7b, 8a, 8b, in an embodiment, the first groove 310 and the second groove 320 are equally deep (i.e. D310 = D320). Even if not shown in the figures, it is also possible that the first wall support 212s is provided to such a first wall 212 that limits the one of the two grooves 310, 320 that is deeper. Thus, in an embodiment (not shown), a depth D310 of the first groove 310 is more than a depth D320 of the second groove 320. However, the first two options are most preferred, because, if the first groove 310 was deeper than the second groove 320, a bottom of the second groove 320 would provide some support to the first corner 213. Therefore, if support was arranged to the first wall 212, the first wall support 212s should be reasonably large, which could hinder the draining capability of the first groove 310. The, preferably, [i] the grooves 310, 320 are equally deep or, if not, [ii] the first wall support 212s is arranged such that it limits the first groove 310 that is shallower than the second groove 320.

Figure 4e is a further top view illustration of the first tread block of Figure 4d. Therein the first tread block 210 comprises a fourth wall support 218s having a top 218t on the fourth wall 218, such that the fourth wall support 214s extends from the second corner 215, and a side of the fourth wall support 218s limits a first part of the fourth groove 340, the side of the fourth wall support 218s extending to a bottom of the fourth groove 340. Figures 13 to 15 describe the wall supports 216s, 218s at the second corner 215.

Similarly as in the case of the first corner 213, the arrangement of the top 210t of the first tread block 210, the top 218t of the fourth wall support 218s in relation to each other is executed so that the top 218t of the fourth wall support 218s is arranged at least 2 mm from a bottom of the fourth groove 340 and at least 2 mm from the top 210t of the first tread block 210. In an embodiment, the top 218t of the fourth wall support 218s forms a fourth step on the fourth wall 218, the fourth step being arranged at a position defined by these measures.

What has been said about the primary width of the first groove w1a and the secondary width of the first groove w1b, applies *mutatis mutandis* to the primary width of the fourth groove w4a and the secondary width of the fourth groove w4b. Reference is made to Fig. 14b. Preferably, the primary width of the fourth groove w4a is 0.1 mm to 3 mm greater than the secondary width of the fourth groove w4b. More preferably, the primary width of the fourth groove w4a is 0.5 mm to 2.5 mm or 1.5 mm to 2.5 mm greater than the secondary width of the fourth groove w4b. The primary width of the fourth groove w4a is defined at a location that is between the top 218t of the fourth wall support 218s and the top of the first tread block 210, and the secondary width of the fourth groove w4b is defined at a location that is between the top 218t of the fourth wall support 218s and a bottom of the fourth groove 340.

Moreover, to ensure that the fourth groove 340 drains well water/slush/mud/snow, the fourth wall support 218s does not extend throughout the length of the fourth wall 218 in the direction of the fourth groove 340. More specifically, referring to Fig. 4e, in an embodiment, a length of the fourth wall support L218s is at most 50% of a length L218 of the fourth wall 218, both measured in a longitudinal direction of the fourth groove 340; i.e. L218s ≤ L218×0.5. However, to improve the draining capacity of the fourth groove 340, preferably the length L218s of the fourth wall support is at most a third (33%), more preferably at most a fourth (25%) of the length L218 of the fourth wall; both measured in a longitudinal direction of the fourth groove 340.

As discussed above, the first corner 213 is reasonably sharp. Likewise, in an embodiment, the second corner 215 is reasonably sharp. More specifically, in Fig. 13, a first part of the third wall 216 extends from the second corner 215 and the top 210t of the first tread block 210, the first part of the third wall 216 defining a third normal N3, the third normal N3 being directed into the third groove 310. Likewise, a first part of the fourth wall 218 extends from the second corner 215 and the top 210t of the first tread block 210, the first part of the fourth wall 218 defining a fourth normal N4, the fourth normal N4 being directed into the fourth groove 340. An angle α4 (shown in Fig. 4c2) between the third normal N3 and the fourth normal N4 is 130 to 170 degrees, preferably 130 to 165 degrees, similarly to the angle α1 between the first normal N1 and the second normal N2. Like the first corner 213, the second corner 215 is convex. The angles α1 and ϕ1 of the first corner 213 are related with each other as the angles α4 and ϕ4 of the second corner 215.

Figure 15 is a similar illustration of the second corner 215 as Figure 7a is of the first corner 213. Illustrated there, in addition to the third normal N3 and the fourth normal N4 discussed before, are a third support normal N3s and a fourth support normal N4s. The second part of the third wall 216 extends from the second corner 215 and is defined by the third wall support 216s, the second part of the third wall 216 defining the third support normal N3s, the third support normal N3s being directed into the third groove 330. Similarly, a second part of the fourth wall 218 extends from the second corner 215 and is defined by the fourth wall support 218s, the second part of the fourth wall 218 defining a fourth support normal N4s, the fourth support normal N4s being directed into the fourth groove 340.

What has been said about the angles present in the first corner 213 and shown in Fig. 10 applies to the second corner 215 *mutatis mutandis.* Thus, in an embodiment, an angle (not shown) between fourth support normal N4s and the third support normal N3s is less than an angle (not shown) between the third normal N3 and the fourth normal N4. In an embodiment, an angle (not shown) between fourth support normal N4s and the third support normal N3s is less than an angle (not shown) between the third support normal N3s and the fourth normal N4; and the angle (not shown) between the third support normal N3s and the fourth normal N4 is less than the angle (not shown) between the third normal N3 and the fourth normal N4.

In comparison to the embodiments with only one wall support (212s or 216s) extending from a corner (213, 215), e.g. in Figures 4b, 6a, and 6b, arranging two wall supports extending from a corner, for example, in the manner illustrated in Figure 4b, further enhances the effect of mitigating the structural instabilities and vibrations of a tread block corner (213, 215). As two wall supports extend from a corner, the mitigation effect is further enhanced on both walls surrounding a tread block corner.

Referring to Figs. 6a-7b, in an embodiment, the first tread block 210 comprises a sipe 500, and, as also shown without all reference numerals, several sipes 500. However, preferably the sipes 500 are arranged so that the first wall support 212s does not comprise a part of the sipe 500. This ensures that the first wall support 212s supports the first corner 213 well. Namely, a sipe would weaken the supportive effect of the first wall support 212s. Preferably, in embodiments that comprise other wall supports 214s, 216s, 218s, none of the other wall supports 214s, 216s, 218s comprises a part of the sipe 500 or another sipe 500.

The tread block arrangements 200 as discussed above can be used to form a tread 110 of a tyre 100. In the alternative, tread block arrangements 200 as discussed above can be used to from a tread band, which, when applied on an untreaded tyre, will form a tread 110 of the tyre. Thus, an embodiment is a tire 100 that comprises the tread block arrangement 200 as hereinabove detailed. When applied on a tyre, a longitudinal direction DL of the tread band is arranged parallel to a circumferential direction DC of the tyre.

As detailed above, a sharp first corner 213 is very effective on difficult road conditions, especially snow/slush/mud, as the first corner 213 (as well as a second corner 215) bite well into the snow/slush/mud, improving grip and handling properties of the tire. However, how well such a sharp first corner bites the snow/slush/mud depends also on the orientation of the first tread block 210 relative to the direction of rotation R.

In this respect, Figure 5 illustrates a top view of embodiment of a plurality of tread blocks and grooves in between and around tread blocks, in particular the first tread block 210. As depicted in Fig. 5, preferably, the first tread block 210 has a substantially quadrilateral shape, and the first corner 213 is one of the corners of the first tread block defining the longer diagonal of the first tread block 210. A direction D of the longer diagonal of the first tread block 210 is shown in Figs. 4b, 4e, and 5. The second corner 215 is the other one of the corners of the first tread block defining the longer diagonal of the first tread block 210.

It has been found that the biting of the first corner 213 to snow/slush/mud is of great importance, when the first corner 213 heads substantially in the forward or in the rearward direction. More specifically, it has been found that the biting of the first corner 213 to snow/slush/mud is of great importance at least when the direction D of the longer diagonal of the first tread block is not a transversal direction of the tread 110 and the first corner 213 is arranged on the longer diagonal. More specifically, in a preferable embodiment of a tire, an angle γ between the direction D of the longer diagonal of the first tread block 210 and a circumferential direction DC of the tire is at most 60 degrees. Reference is made to Figs. 4b, 4e, and 5. In the embodiment of Fig. 4e, the angle γ is about 30 degrees, and thus well in the range detailed above. Concerning the direction D of the diagonal in Fig. 5, therein the angle between the direction D of the diagonal and the circumferential direction DC is also about 30 degrees. In a preferable embodiment, the angle γ is less than 45 degrees. Herein the circumferential direction DC may be either the positive direction of rotation R or the negative direction of rotation -R. The biting effect of the sharp first corner 213 depends on whether the vehicle is in a state of acceleration or deceleration. However, preferably both the first corner 213 and the second corner 215, which are on the longer diagonal of the first tread block, are sharp in the meaning discussed above; and an angle γ between the direction D of the longer diagonal and a circumferential direction DC of the tire is at most 60 degrees. As discussed above, at least a wall 212, 214 defining the first corner 213 is provided with at least a wall support 212s, preferably with the wall supports 212s, 214s. Even more preferably, in addition, also at least a wall 216, 218 defining the second corner 215 is provided with at least a wall support 216s, preferably with the wall supports 216s, 218s.

Moreover, it has been found that the biting of the first corner 213 to snow/slush/mud is of great importance, when the first corner 213 heads substantially in the forward or in the rearward direction irrespective of whether the first tread block 210 comprises a diagonal or not. To be more specific, for the first corner 213, one can define a plane P such that that a normal NP thereof forms a primary angle β1 with the first normal N1; and another normal -NP of the plane P, the other normal -NP being reverse to the normal NP, forms a secondary angle β2 with the second normal N2, such that primary angle β1 is equal to the secondary angle β2. Thus, the plane P divides the angle ϕ1 to two equally large parts (see Fig. 4c1). For the reasons detailed above, in an embodiment, the direction defined by the intersection of the plane P and the tread 110 (or tread band 100) forms and angle of at most 60 degrees with a circumferential direction DC of the tire. Or, in terms of the normal NP, an angle between the normal NP of the plane P and the circumferential direction DC is at least 30 degrees. More precisely, the smaller one of the following angles: [i] an angle between the normal NP of the plane P and the direction of rotation R and [ii] an angle between the normal NP of the plane P and a direction -R that is reverse to the direction of rotation R, is at least 30 degrees.

In a preferable embodiment, an angle between the normal NP of the plane P and the circumferential direction DC is more than 45 degrees. More precisely, the smaller one of the following angles: [i] an angle between the normal NP of the plane P and the direction of rotation R and [ii] an angle between the normal NP of the plane P and a direction -R that is reverse to the direction of rotation R, is more than 45 degrees.

Reference is made to Fig. 5. In Fig. 5, the normal NP of the plane P is more or less transversal. Notably Fig. 5 shows also a plane P' defined by the further corner 213' of the central rib. Obviously, a normal of the plane P' is likewise more or less transversal, even if not shown. In this way, also the further corner 213' is oriented relative to the circumferential direction in a similar way as the first corner 213 *mutatis mutandis.* In the embodiment of Fig. 5, an angle between the plane P' and the circumferential direction DC is only about 15 degrees, whereby an angle between a normal of the plane P' and the circumferential direction DC is about 75 degrees; which is clearly at least 30 degrees and more than 45 degrees. Hereinabove, the angle refers to the smaller of the two possibilities. Namely another angle between the normal of the plane P' (or another normal of the plane P' as there are two normals reverse to each other) and the circumferential direction DC (or another circumferential direction as there are two circumferential directions, +R and -R, that are reverse to each other) is about 105 degrees (i.e. 180 minus 75). The larger of these two angles is always greater than 45 degrees, whereby the smaller of the two angles is meant above.

What has been said above applies to a tread block arrangement, too. Thus, in an embodiment, an angle γ between the direction D of the longer diagonal and a longitudinal direction DL of the tread band is at most 60 degrees. In an embodiment an angle with the normal NP of the plane P and a longitudinal direction DL of the tread band is at least 30 degrees.

In the embodiment of Fig. 5, the first tread block 210 is separated by a groove from a shoulder block, namely by the first groove 310, and the first tread block 210 is separated by a groove from a central rib or a central tread block, namely by the third groove 330. However, a central rib of the tread may be the first tread block 210 that comprises the wall support(s) 212s, 214s, 216s, 218s. E.g. Fig. 5 shows a further corner 213' of such a tread block, the walls of the further corner 213' being supported as described hereinabove for the first corner 213. Likewise, the first tread block 210 may be a shoulder block of a tire or a tread band. A shoulder block is arranged on a shoulder area and comprises - in a transversal direction of the tyre or the tread block arrangement - other tread blocks only on one side. The tread block arrangement 200 illustrated in Figure 5 is merely an example of how tread blocks 210, 220, 230 and grooves 310, 320, 330, 340 can be arranged. Wall supports may be arranged on various embodiments of a tread block arrangement 200.

Preferably, the first tread block 210 is made of rubber material having a Shore hardness in the range 48 to 72 Sh(A) as measured according to the standard ASTM D2240 with durometer type A, at the temperature 23 °C. Such hardness of the material is optimal for the performance of the tire in general. However, such hardness of the material most often results in the problems of vibrations, as discussed in the context of prior art. In typical all-season tires the hardness is in the range 60 to 70 Sh(A), while in typical nordic winter tires the hardness is in the range 48 to 59 Sh(A) and in typical CE winter tires the hardness is in the range 55 to 65 Sh(A), to guarantee optimal performance. The inventors have found that the problem of vibrations is more prominent in winter tires and all-season tires than in summer tires. Possibly, the softer the material, the easier the vibrations occur. Thus, even more preferably, the hardness of the first tread block 210 is in the range 48 to 70 Sh(A), more preferably 48 to 65 Sh(A), and even more preferably 48 to 59 Sh(A). In typical summer tires, the hardness may be higher, e.g. up to 72 Sh(A).

As detailed above, the sharp corners 213, 215 are preferably used is an all-season tire or in a winter tire. Moreover, in these tires, the tire material is reasonably soft in terms of Shore hardness. Thus, the embodiments discussed above are particularly suitable for all-season tires and winter tyres. Thus, in an embodiment, the tire 100 comprises a marking 400 indicative of the tire 100 being suitable for use as an all-season tire or as a winter tire. Reference is made to Fig. 3 showing such a marking 400. Such a marking 400 may be, e.g., "M+S" or similar or different, depending on how this is to be indicated to the user of the tire. In addition, preferably, the first tread block 210 is made of material having a Shore hardness that is within the limits disclosed above.

## Claims

1. A tread block arrangement (200) for a tire (100) or a tread band, the tread block arrangement (200) comprising
- a first tread block (210) and further tread blocks,
- a first groove (310), of which a part is limited by a first wall (212) of the first tread block (210), so that a first part of the first wall (212) extends from the first corner (213) and the top (210t) of the first tread block (210), the first part of the first wall (212) defining a first normal (N1), the first normal (N1) being directed into the first groove (310), and
- a second groove (320), of which a part is limited by a second wall (214) of the first tread block (210) so that a first part of the second wall (214) extends from the first corner (213) and the top (210t) of the first tread block (210), the first part of the second wall (214) defining a second normal (N2), the second normal (N2) being directed into the second groove (320), wherein
- an angle (α1) between the first normal (N1) and the second normal (N2) is 130 to 170 degrees,
- the first tread block (210) comprises a first wall support (212s) having a top (212t) on the first wall (212) such that
- the first wall support (212s) extends from the first corner (213),
- a side of the first wall support (212s) limits a first part of the first groove (310), the side of the first wall support (212s) extending to a bottom of the first groove (310), and
- a primary width of the first groove (w1a) is greater than a secondary width of the first groove (w1b), wherein
- the primary width of the first groove (w1a) is defined at a location that is between the top (212t) of the first wall support (212s) and a top (210t) of the first tread block (210), and
- the secondary width of the first groove (w1b) is defined at a location that is between the top (212t) of the first wall support (212s) and a bottom of the first groove (310).

2. The tread block arrangement of claim 1, wherein,
- the first tread block (210) comprises a second wall support (214s) having a top (214t) on the second wall (214), such that
- the second wall support (214s) extends from the first corner (213),
- a side of the second wall support (214s) limits a first part of the second groove (320), the side of the second wall support (214s) extending to a bottom of the second groove (320), and
- a primary width of the second groove (w2a) is greater than a secondary width of the second groove (w2b), wherein
- the primary width of the second groove (w2a) is defined at a location that is between the top (214t) of the second wall support (214s) and the top (210t) of the first tread block (210), and
- the secondary width of the second groove (w2b) is defined at a location that is between the top (214t) of the second wall support (214s) and a bottom of the second groove (320).

3. The tread block arrangement of claim 2, wherein
- a second part of the first wall (212) extends from the first corner (213) and is defined by the first wall support (212s), the second part of the first wall (212) defining a first support normal (N1s), the first support normal (N1s) being directed into the first groove (310),
- a second part of the second wall (214) extends from the first corner (213) and is defined by the second wall support (214s), the second part of the second wall (214) defining a second support normal (N2s), the second support normal (N2s) being directed into the second groove (320),
- an angle (α2) between the first support normal (N1s) and the second normal (N2) is less than an angle (α1) between the first normal (N1) and the second normal (N2), and
- an angle (α3) between second support normal (N2s) and first support normal (N1s) is less than the angle (α2) between the first support normal (N1s) and the second normal (N2).

4. The tread block arrangement of any of the claims 1 to 3, wherein
- the top (212t) of the first wall support (212s) is arranged at least 2 mm from a bottom of the first groove (310) and at least 2 mm from the top (210t) of the first tread block (210);
preferably,
- a/the top (214t) of a/the second wall support (214s) is arranged at least 2 mm from a bottom of the second groove (320) and at least 2 mm from the top (210t) of the first tread block (210).

5. The tread block arrangement of any of the claims 1 to 4, wherein
- the primary width of the first groove (w1a) is 0.1 mm to 3 mm greater, preferably 0.5 mm to 2.5 mm greater, than the secondary width of the first groove (w1b);
preferably,
- a/the primary width of the second groove (w2a) is 0.1 mm to 3 mm greater, preferably 0.5 mm to 2.5 mm greater, than a/the secondary width of the second groove (w2b).

6. The tread block arrangement of any of the claims 1 to 5, wherein
- a depth (D310) of the first groove (310) is less than a depth (D320) of the second groove (320) OR
- the first groove (310) and the second groove (320) are equally deep.

7. The tread block arrangement of any of the claims 1 to 6, wherein
- the first corner (213) comprises a first part (213a) extending from the top (210t) of the first tread block (210) and a second part (213b) being defined by the first wall support (212s) and extending from a bottom of an intersection of the first groove (310) and the second groove (320), wherein
- the second part (213b) of the first corner (213) is arranged at most 3 mm further apart from a centre of the first tread block (210) than the first part (213a) of the first corner (213);
for example,
[A]
- the second part (213b) of the first corner (213) is arranged 0.1 mm to 3 mm further apart from a centre of the first tread block (210) than the first part (213a) of the first corner (213) or
[B]
- the second part (213b) of the first corner (213) is arranged as far apart from a centre of the first tread block (210) than the first part (213a) of the first corner (213).

8. The tread block arrangement of any of the claims 1 to 7, comprising
- a third groove (330), of which a part is limited by a third wall (216) of the first tread block (210), and
- a fourth groove (340), of which a part is limited by a fourth wall (218) of the first tread block (210), wherein
- the third wall (216) and the fourth wall (218) meet at a second corner (215) of the first tread block (210),
- the first tread block (210) comprises a third wall support (216s) having a top (216t) on the third wall (216), such that
- the third wall support (216s) extends from the second corner (215),
- a side of the third wall support (216s) limits a first part of the third groove (330), the side of the third wall support (216s) extending to a bottom of the third groove (330), and
- a primary width of the third groove (w3a) is greater than a secondary width of the third groove (w3b), wherein
- the primary width of the third groove (w3a) is defined at a location that is between the top (216t) of the third wall support (216s) and a top of the first tread block (210), and
- the secondary width of the third groove (w3b) is defined at a location that is between the top (216t) of the third wall support (216s) and a bottom of the third groove (330);
preferably,
- the first tread block (210) comprises a fourth wall support (218s) having a top (218t) on the fourth wall (218), such that
- the fourth wall support (214s) extends from the second corner (215),
- a side of the fourth wall support (218s) limits a first part of the fourth groove (340), the side of the fourth wall support (218s) extending to a bottom of the fourth groove (340), and
- a primary width of the fourth groove (w4a) is greater than a secondary width of the fourth groove (w4b), wherein
- the primary width of the fourth groove (w4a) is defined at a location that is between the top (218t) of the fourth wall support (218s) and the top of the first tread block (210), and
- the secondary width of the fourth groove (w4b) is defined at a location that is between the top (218t) of the fourth wall support (218s) and a bottom of the fourth groove (340).

9. The tread block arrangement of the claim 8, wherein
- the second corner (215) and the first corner (213) are arranged on a diagonal of the first tread block (210);
preferably,
- the second corner (215) and the first corner (213) are arranged on such a diagonal of the first tread block (210) that is the longest of all diagonals of the first tread block (210).

10. The tread block arrangement of claim 8 or 9, wherein
- a first part of the third wall (216) extends from the second corner (215) and the top (210t) of the first tread block (210), the first part of the third wall (216) defining a third normal (N3), the third normal (N3) being directed into the third groove (310),
- a first part of the fourth wall (218) extends from the second corner (215) and the top (210t) of the first tread block (210), the first part of the fourth wall (218) defining a fourth normal (N4), the fourth normal (N4) being directed into the fourth groove (340), and
- an angle (α4) between the third normal (N3) and the fourth normal (N4) is 130 to 170 degrees.

11. The tread block arrangement of any of the claims 8 to 10, wherein
- the top (216t) of the third wall support (216s) is arranged at least 2 mm from a bottom of the third groove (330) and at least 2 mm from the top (210t) of the first tread block (210) AND/OR
- the primary width of the third groove (w3a) is 0.1 mm to 3 mm greater, preferably 0.5 mm to 2.5 mm greater, than the secondary width of the third groove (w3b);

12. The tread block arrangement of any of the claims 1 to 11, wherein,
- a length of the first wall support (L212s) measured in a longitudinal direction of the first groove (310) is at most 50% of a length of the first wall (L212) measured in a longitudinal direction of the first groove (310);
preferably also one or more of the following applies:
- a length of the second wall support (L214s) measured in a longitudinal direction of the second groove (320) is at most 50% of a length of the second wall (L212) measured in a longitudinal direction of the second groove (320);
- a length of the third wall support (L216s) measured in a longitudinal direction of the third groove (330) is at most 50% of a length of the third wall (L216) measured in a longitudinal direction of the third groove (330); and/or
- a length of the fourth wall support (L218s) measured in a longitudinal direction of the fourth groove (340) is at most 50% of a length of the fourth wall (L218) measured in a longitudinal direction of the fourth groove (340).

13. The tread block arrangement of any of the previous claims, wherein
- the first tread block (210) comprises a sipe (500);
preferably,
- the first wall support (212s) does not comprise a part of the sipe (500); more preferably,
- none of the first wall support (212s), a/the second wall support (214s), a/the third wall support (216s), and a/the fourth wall support (218s) comprises a part of any sipe (500).

14. The tread block arrangement (200) of any of the previous claims, wherein
- the first tread block (210) comprises rubber material having a Shore hardness in the range 48 to 72 Sh(A), preferably 48 to 70 Sh(A) or 48 to 65 Sh(A) or 48 to 59 Sh(A), as measured with durometer type A, at the temperature 23 °C.

15. A tire (100) comprising the tread block arrangement (200) of any of the previous claims, the tread block arrangement (200) forming a tread (110) of the tire (100);
preferably,
- the tire (100) comprises a marking (400) indicative of the tire (100) being suitable for use as an all-season tire or as a winter tire.

16. The tire of claim 15, wherein
- a plane (P) has a primary normal (NP) that forms a primary angle (β1) with the first normal (N1),
- the plane (P) has a secondary normal (-NP) that is reverse to the primary normal (NP), the secondary normal (-NP) forming a secondary angle (β2) with the second normal (N2),
- the primary angle (β1) is equal to the secondary angle (β2), and
- an angle with the primary normal (NP) of the plane (P) and a circumferential direction (DC) of the tire (100) is at least 30 degrees.

17. The tire of claim 15 or 16, wherein
- the first corner (213) is arranged on such a diagonal of the first tread block (210) that is the longest of all diagonals of the first tread block (210) and
- an angle (γ) between a direction (D) of the diagonal and a circumferential direction (DC) of the tire is at most 60 degrees.
